# EUROPEAN PATENT APPLICATION

(11) **EP 4 119 503 A1**
(43) Date of publication of application: **18.01.2023**
(21) Application number: 21878006.2
(22) Date of filing: 06.10.2021
(51) Int. Cl.: C01G 53/00, H01M 4/525, H01M 4/505

(54) **METHOD FOR PRODUCING MIXTURE OF LITHIUM COMPOSITE TRANSITION METAL OXIDE POSITIVE ELECTRODE ACTIVE MATERIAL PARTICLES CONTAINING HIGH CONTENT OF NICKEL**

(30) Priority: 06.10.2020 KR 20200128912
(71) Applicant: Lg Chem, Ltd., Seoul 07336 (KR)
(72) Inventor: LEE, Hyuck, Daejeon 34122 (KR); MOK, Duck-Gyun, Daejeon 34122 (KR); SON, Min-Hee, Daejeon 34122 (KR)
(74) Representative: Hoffmann Eitle
(86) International application number: PCT/KR2021/013725
(87) International publication number: WO 2022/075755

(57) **Abstract**

Disclosed is a method for manufacturing a mixture of positive electrode active material particles of nickel-rich lithium composite transition metal oxide, comprising the steps of: (S1) washing first positive electrode active material particles having a predetermined average particle size and consisting of a positive electrode active material of lithium composite transition metal oxide having the nickel content of 80 mol% or more in the total transition metal; (S2) washing second positive electrode active material particles having a predetermined average particle size and consisting of a positive electrode active material of lithium composite transition metal oxide having the nickel content of 80 mol% or more in the total transition metal, wherein the predetermined average particle size of the second positive electrode active material particles is different from the average particle size of the first positive electrode active material particles; (S3) mixing the first positive electrode active material particles and the second positive electrode active material particles respectively washed from the (S1) and the (S2) to manufacture a mixture of positive electrode active material particles; and (S4) filtering and drying the mixture of positive electrode active material particles.

## Description

### TECHNICAL FIELD

The present disclosure relates to a method for manufacturing a positive electrode active material comprising a mixture of nickel-rich lithium composite transition metal oxide positive electrode active material particles having different average particle sizes.

The present application claims the benefit of Korean Patent Application No. 10-2020-0128912 filed on October 6, 2020 with the Korean Intellectual Property Office, the disclosure of which is incorporated herein by reference in its entirety.

### BACKGROUND ART

Attention is directed to a positive electrode active material of Ni-rich lithium composite transition metal oxide.

In the manufacture of the positive electrode active material of Ni-rich lithium composite transition metal oxide, there is an increase in residual lithium impurities, for example, lithium carbonate. That is, with the increasing nickel content, the positive electrode active material of Ni-rich lithium composite transition metal oxide is manufactured by sintering at the lower sintering temperature, causing an increase in lithium impurities remaining on the surface. When reacting with an electrolyte solution, the impurities degrade the battery performance, produce gas and cause gelation in the preparation of an electrode slurry.

Meanwhile, there is an approach to improve the roll press ratio of the positive electrode by mixing positive electrode active material particles of Ni-rich lithium composite transition metal oxide having different average particle sizes, and it may be advantageous in terms of energy density and the roll pressing process.

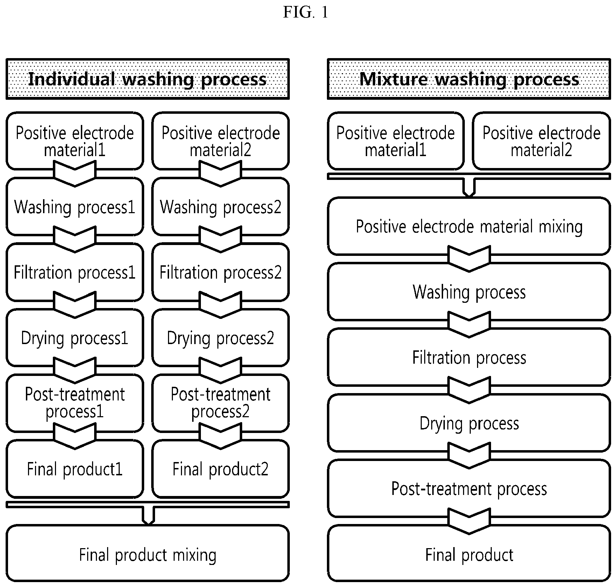

To manufacture the mixture of Ni-rich lithium composite transition metal oxide positive electrode active material particles having different average particle sizes with lower lithium impurity content, the following two methods (see FIG. 1) have been proposed.

The first is a manufacturing method by a so-called individual washing process.

The individual washing process is performed by washing-filtration-drying of Ni-rich positive electrode active material particles having different average particle sizes, positive electrode material 1 and positive electrode material 2, by each separate process to remove by-products, for example, lithium impurities, followed by post-treatment such as coating layer formation on the surface of the positive electrode material 1 and the positive electrode material 2, if necessary, to manufacture a final product of the positive electrode material 1 and a final product of the positive electrode material 2, respectively, and then mixing the final product of positive electrode material 1 with the final product of positive electrode material 2.

The individual washing process achieves washing in optimum conditions for active material particles having different average particle sizes, but requires high costs due to having to perform all processes separately for each particle having different average particle sizes, and positive electrode active material particles having small average particle size exhibit poor flowability during transfer in each process, causing a clogged device, and require a long classification time.

The second is a manufacturing method by a so-called mixture washing process.

The mixture washing process is performed by mixing Ni-rich positive electrode active material particles having different average particle sizes, positive electrode material 1 and positive electrode material 2, to prepare a mixture of positive electrode active material particles, washing-filtration-drying to remove by-products, for example, lithium impurities, and post-treatment such as coating layer formation on the surface of the positive electrode materials, if necessary, to manufacture a final product.

Since the mixture washing process is performed through a single process, it is advantageous in terms of productivity and particle flowability in the process, but it is difficult to achieve washing in the optimum conditions for positive electrode active material particles having different average particle sizes.

### DISCLOSURE

### Technical Problem

The present disclosure is directed to providing a method for manufacturing a positive electrode active material comprising a mixture of Ni-rich lithium composite transition metal oxide positive electrode active material particles having different average particle sizes, thereby achieving optimum washing for each positive electrode active material particle having different average particle sizes, and improving productivity and particle flowability in the process.

### Technical Solution

To solve the above-described technical problem, a method for manufacturing a mixture of positive electrode active material particles of nickel-rich lithium composite transition metal oxide according to a first embodiment of the present disclosure comprises the steps of: (S1) washing first positive electrode active material particles having a predetermined average particle size and consisting of a positive electrode active material of lithium composite transition metal oxide having the nickel content of 80 mol% or more in the total transition metal; (S2) washing second positive electrode active material particles having a predetermined average particle size and consisting of a positive electrode active material of lithium composite transition metal oxide having the nickel content of 80 mol% or more in the total transition metal, wherein the average particle size of the second positive electrode active material particles is different from the first positive electrode active material particles; (S3) mixing the first positive electrode active material particles and the second positive electrode active material particles respectively washed from the (S1) and the (S2) to manufacture a mixture of positive electrode active material particles; and (S4) filtering and drying the mixture of positive electrode active material particles.

According to a second embodiment of the present disclosure, in the manufacturing method according to the first embodiment, the lithium composite transition metal oxide may be represented by the following Formula 1:

<Formula 1> Li₁₊ₐ[NiₓCo_{y}M¹_{z}M²_{w}]O₂

where M¹ is at least one selected from Mn and Al,
M² is at least one selected from Zr, B, W, Mo, Cr, Nb, Mg, Hf, Ta, La, Ti, Sr, Ba, Ce, F, P, S and Y, and
0≤a≤0.3, 0.6≤x<1.0, 0<y≤0.4, 0<z≤0.4, 0≤w≤0.2, x+y+z+w=1.

According to a third embodiment of the present disclosure, in at least one of the first or second embodiment, an average particle size (D50) of the first positive electrode active material particles: an average particle size (D50) of the second positive electrode active material particles may be 20:1 to 8:3.

According to a fourth embodiment of the present disclosure, in at least one of the first to third embodiments, an average particle size (D50) of the first positive electrode active material particles may be 5 µm or less, and an average particle size (D50) of the second positive electrode active material particles may be 9 µm or more.

According to a fifth embodiment of the present disclosure, in at least one of the first to fourth embodiments, mixing the first positive electrode active material particles and the second positive electrode active material particles in the (S3) may be performed by a line mixer.

According to a sixth embodiment of the present disclosure, in at least one of the first to fifth embodiments, the manufacturing method may further comprise a step of, after the (S4), classifying the dried mixture of positive electrode active material particles.

According to a seventh embodiment of the present disclosure, in at least one of the first to sixth embodiments, the manufacturing method may further comprise a step of, after the (S4), forming a coating layer on a surface of the positive electrode active material particles in the dried mixture of positive electrode active material particles, and for example, the coating layer may be a boron containing coating layer.

According to an eighth embodiment of the present disclosure, in at least one of the first to seventh embodiments, an amount of residual lithium impurities in the mixture of positive electrode active material particles of nickel-rich lithium composite transition metal oxide may be 0.7 weight% or less.

### Advantageous Effects

According to the manufacturing method of the present disclosure, in the manufacture of a positive electrode active material comprising a mixture of Ni-rich lithium composite transition metal oxide positive electrode active material particles having different average particle sizes, it is possible to achieve optimum washing for each positive electrode active material particle having different average particle sizes, and improve productivity and particle flowability in the process.

### DESCRIPTION OF DRAWINGS

FIG. 1 is a process flow diagram exemplarily showing a method for manufacturing a mixture of positive electrode active material particles of Ni-rich lithium composite transition metal oxide according to the conventional method.
FIG. 2 is a process flow diagram exemplarily showing a method for manufacturing a mixture of positive electrode active material particles of Ni-rich lithium composite transition metal oxide according to an embodiment of the present disclosure.
FIG. 3 is a graph showing the amount of residual lithium impurities in a mixture of positive electrode active material particles of Ni-rich lithium composite transition metal oxide manufactured by manufacturing methods of example and comparative example.
FIG. 4 is a graph showing the cycling characteristics of batteries manufactured using a mixture of positive electrode active material particles of Ni-rich lithium composite transition metal oxide manufactured by manufacturing methods of example and comparative example.

### BEST MODE

Hereinafter, the present disclosure will be described in detail. It should be understood that the terms or words used in the specification and the appended claims should not be construed as limited to general and dictionary meanings, but rather interpreted based on the meanings and concepts corresponding to technical aspects of the present disclosure on the basis of the principle that the inventor is allowed to define terms appropriately for the best explanation.

Hereinafter, a method for manufacturing a mixture of positive electrode active material particles of Ni-rich lithium composite transition metal oxide according to the present disclosure will be described.

According to the method for manufacturing a mixture of positive electrode active material particles of Ni-rich lithium composite transition metal oxide according to a first embodiment of the present disclosure, the manufacturing method starts with (S1) washing first positive electrode active material particles consisting of a positive electrode active material of lithium composite transition metal oxide having the nickel content of 80 mol% or more in the total transition metal, the first positive electrode active material particles having a predetermined average particle size. Additionally, the manufacturing method includes (S2) washing second positive electrode active material particles consisting of a positive electrode active material of lithium composite transition metal oxide having the nickel content of 80 mol% or more in the total transition metal, the second positive electrode active material particles having a predetermined average particle size that is different from the average particle size of the first positive electrode active material particles through a process that is separate from (S1).

The use of the positive electrode active material of lithium composite transition metal oxide having the nickel content of 80 atm% or more in the total transition metal may achieve high capacity characteristics.

The positive electrode active material particles of Ni-rich lithium composite transition metal oxide, namely, the first positive electrode active material particles having the predetermined average particle size and the second positive electrode active material particles having the predetermined average particle size that is different from the average particle size of the first positive electrode active material particles, may be easily prepared by those skilled in the art through the well-known sintering conditions in the manufacture or commonly used methods, for example, crushing and classification.

Here, the lithium composite transition metal oxide may be represented by the following Formula 1, but is not limited thereto.

<Formula 1> Li₁₊ₐ[NiₓCo_{y}M¹_{z}M²_{w}]O₂

In the above Formula 1,
M¹ is at least one selected from Mn and Al,
M² is at least one selected from Zr, B, W, Mo, Cr, Nb, Mg, Hf, Ta, La, Ti, Sr, Ba, Ce, F, P, S and Y, and
0≤a≤0.3, 0.6≤x<1.0, 0<y≤0.4, 0<z≤0.4, 0≤w≤0.2, x+y+z+w=1.

In particular, x is preferably equal to or greater than 0.8.

The average particle size (D50) of the first positive electrode active material particles: the average particle size (D50) of the second positive electrode active material particles, added in the washing process, may be 20:1 to 8:3, the average particle size (D50) of the first positive electrode active material particles may be 5 µm or less, and the average particle size (D50) of the second positive electrode active material particles may be 9 µm or more, but is not limited thereto.

The washing process of the first positive electrode active material particles in (S1) and the washing process of the second positive electrode active material particles in (S2) are separately performed, thereby achieving the optimum washing process suitable for the positive electrode active material particles having different average particle sizes. The washing may use water, for example, distilled water or pure water, according to the common method, and an additive, for example, weak acid, may be added to water, if necessary, to increase the washing performance. The washing process reduces the amount of residual lithium impurities, thereby suppressing side reactions on the surface of the final positive electrode active material particles.

Subsequently, the first positive electrode active material particles and the second positive electrode active material particles respectively washed from the (S1) and (S2) are mixed together to prepare a mixture of positive electrode active material particles (S3).

The method for mixing the washed first positive electrode active material particles with the washed second positive electrode active material particles may include a variety of well-known particle mixing methods, and for example, may be performed by supply to a mixing tank or a line mixture at a constant volume using a constant volume pump.

Subsequently, the mixture of positive electrode active material particles is filtered and dried (S4).

The method for filtering the mixture of positive electrode active material particles is well known, and for example, filtration may use a filter funnel or a filter press. The filtration of the mixture of positive electrode active material particles can solve the particle flowability problem faced when filtering only positive electrode active material particles having relatively small average particle size, and reduce the time required for classification as described below.

The mixture of positive electrode active material particles having undergone filtration is dried to remove water, and for example, may be dried by heating in a vacuum oven and evaporating water.

The mixture of positive electrode active material particles dried according to (S4) may further undergo the common classification process, and for example, may be classified through an ultrasonic classifier.

Additionally, the mixture of positive electrode active material particles having undergone the drying process in (S4) alone or in combination with the classification process may undergo a post-treatment process such as coating layer formation. That is, for example, the manufacturing method may further include forming a coating layer on the surface of the positive electrode active material particles, and the coating layer may be a boron containing coating layer. More specifically, a coating layer raw material such as H₃BO₃ may be mixed with the mixture of positive electrode active material particles and sintered at a predetermined temperature to form the boron containing coating layer on the surface of the positive electrode active material particles.

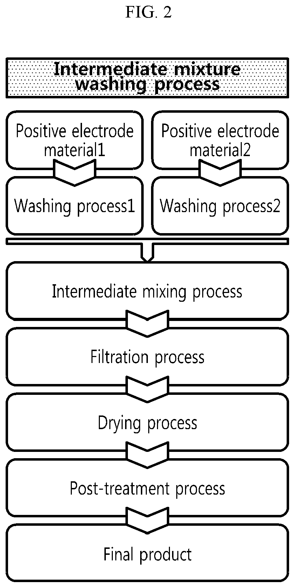

FIG. 2 shows a process flow diagram according to an embodiment regarding the above-described manufacturing method of the present disclosure.

The amount of residual lithium impurities in the mixture of positive electrode active material particles of Ni-rich lithium composite transition metal oxide manufactured by the above-described method may be 0.7 weight% or less.

The mixture of positive electrode active material particles of Ni-rich lithium composite transition metal oxide manufactured as described above may be coated on a positive electrode current collector and used by the below-described method.

For example, the positive electrode current collector is not limited to a particular type and may include any type of material having conductive properties without causing any chemical change to the battery, for example, stainless steel, aluminum, nickel, titanium, sintered carbon or aluminum or stainless steel surface treated with carbon, nickel, titanium or silver. Additionally, the positive electrode current collector may be generally 3 to 500 µm in thickness, and may have microtexture on the surface to improve the adhesion strength of the positive electrode active material. For example, the positive electrode current collector may come in various forms, for example, films, sheets, foils, nets, porous bodies, foams and non-woven fabrics.

In addition to the mixture of positive electrode active material particles, the positive electrode active material layer may comprise a conductive material and optionally a binder, if necessary. In this instance, the mixture of positive electrode active material particles may be included in an amount of 80 to 99 weight%, and more specifically 85 to 98.5 weight% based on the total weight of the positive electrode active material layer. When the amount of the mixture of positive electrode active material particles is within the above-described range, the outstanding capacity characteristics may be manifested.

The conductive material is used to impart the conductive properties to the electrode, and may include, without limitation, any type of conductive material having the ability to conduct electrons without causing any chemical change in the battery. A specific example of the conductive material may include graphite, for example, natural graphite or artificial graphite; carbon-based materials, for example, carbon black, acetylene black, ketjen black, channel black, furnace black, lamp black, thermal black and carbon fibers; metal powder or metal fibers, for example, copper, nickel, aluminum and silver; conductive whiskers, for example, zinc oxide and potassium titanate; conductive metal oxide, for example, titanium oxide; or conductive polymers, for example, polyphenylene derivatives, used alone or in combination. The conductive material may be included in an amount of 0.1 to 15 weight% based on the total weight of the positive electrode active material layer.

The binder plays a role in improving the bonding between the positive electrode active material particles and the adhesive strength between the positive electrode active material particles and the current collector. A specific example of the binder may include polyvinylidene fluoride (PVDF), polyvinylidene fluoride-hexafluoropropylene copolymer (PVDF-co-HFP), polyvinylalcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or a variety of copolymers thereof, used alone or in combination. The binder may be included in an amount of 0.1 to 15 weight% based on the total weight of the positive electrode active material layer.

The positive electrode may be manufactured by the commonly used positive electrode manufacturing method except that the above-described mixture of positive electrode active material particles is used. Specifically, the positive electrode may be manufactured by coating a positive electrode active material layer forming composition prepared by dissolving or dispersing the mixture of positive electrode active material particles and optionally, the binder and the conductive material in a solvent on the positive electrode current collector, following by drying and press rolling.

According to another method, the positive electrode may be manufactured by casting the positive electrode active material layer forming composition on a support, separating a film from the support and laminating the film on the positive electrode current collector.

The positive electrode manufactured by the above-described method may be used in electrochemical devices, for example, batteries and capacitors, and more specifically, lithium secondary batteries.

Hereinafter, the present disclosure will be described in detail through examples. However, the embodiments according to the present disclosure may be modified in a variety of other forms, and it should not be interpreted that the scope of the present disclosure is limited to the following examples. The examples of the present disclosure are provided for complete and thorough explanation of the present disclosure to those having ordinary skill in the art.

### <Evaluation method>

### <Measurement of average particle size (D50)>

D50 is calculated from the cumulative volume measured using laser diffraction/scattering particle size distribution measurement equipment (Nikkiso, Microtrac HRA).

### <Measurement of amount of residual lithium impurities>

5g of the obtained positive electrode active material particles are added to 100 ml of DI water, stirred for 5 minutes and filtered. The amount of residual lithium carbonate and lithium hydroxide (weight%) is measured by measuring the amount while adding 0.1M HCl to the filtered solution until the pH is 4 using a pH titrator.

### <Measurement of water content>

The weight of the positive electrode active material particles having undergone washing and filtration is measured, the weight after drying in a vacuum oven of 130°C for 2 hours or more is measured, and the water content (%) is calculated from the two values.

### <Measurement of Brunauer-Emmett-Teller (BET)>

3g of the obtained positive electrode active material particles are put into a sample tube, pre-treatment is performed at 150°C for 2 hours, the sample tube containing the sample is connected to a port of BET measurement equipment, and an amount of nitrogen gas adsorbed onto the surface of the sample in the relative pressure (P/PO) range of 0.01 to 0.02 is measured, and the surface area per unit weight (m²/g) of the sample is calculated.

### <Manufacture of coin half cell and performance evaluation>

The obtained positive electrode material, a carbon black conductive material and a PVdF binder are mixed at a weight ratio of 97.5:1.0:1.5 to prepare a positive electrode slurry, and the positive electrode slurry is coated on one surface of an aluminum current collector, followed by drying at 130°C and roll pressing, to manufacture a positive electrode. For a negative electrode, lithium metal is used.

A lithium secondary battery is manufactured by manufacturing an electrode assembly including the manufactured positive electrode and the negative electrode and a porous PE separator interposed between the positive electrode and the negative electrode, placing the electrode assembly in a case, and injecting an electrolyte solution (an electrolyte solution prepared by dissolving 0.1M LiPF₆ in a mixed organic solvent in which EC/EMC/DEC are mixed at a volume ratio of 3:4:3) into the case.

### 0.2C CHC measurement

For the manufactured lithium secondary battery half cell, a charge/discharge test is conducted by charging at 0.2C in CCCV mode at 25°C until 4.3V and discharging at constant current of 0.2C until 3.0V, and the charge capacity, discharge capacity, efficiency and Discharge Initial Resistance (DCIR) are measured in 0.2C CHC.

### Measurement of capacity retention and increase in resistance

Additionally, for the manufactured lithium secondary battery half cell, a charge/discharge test is conducted by charging at 0.33C in CCCV mode at 45°C until 4.3V, and discharging at constant current of 0.33C until 3.0V, and capacity retention and an increase in resistance are measured in 30 cycles.

The positive electrode active material microparticles (D50: 4 µm) used in the following examples and comparative examples are Li_{1.01}[Ni_{0.83}Co_{0.05}Mn_{0.1}Al_{0.02}]O₂, and the positive electrode active material macroparticles (D50: 10µm) are Li_{1.01}[Ni_{0.86}Co_{0.05}Mn_{0.07}Al_{0.02}]O₂.

### Comparative example

Microparticle raw material 1: 50g of microparticles having D50 of 4 µm are put into 60g of water, stirred for 5 minutes, filtered for 2 minutes using a filter funnel, dried in a vacuum oven of 130°C for 12 hours or more and classified through an ultrasonic classifier.

Microparticle raw material 2: 50g of microparticles having D50 of 4 µm are put into 60g of water, stirred for 5 minutes, filtered for 10 minutes using a filter funnel, dried in a vacuum oven of 130°C for 12 hours or more and classified through an ultrasonic classifier.

Macroparticle raw material 1: 50g of macroparticles having D50 of 10 µm are put into 50g of water, stirred for 5 minutes, filtered for 2 minutes using a filter funnel, dried in a vacuum oven of 130°C for 12 hours or more and classified through an ultrasonic classifier.

Macroparticle raw material 2: 50g of macroparticles having D50 of 10 µm are put into 50g of water, stirred for 5 minutes, filtered for 10 minutes using a filter funnel, dried in a vacuum oven of 130°C for 12 hours or more and classified through an ultrasonic classifier.

### Comparative example 1 (Individual washing process)

Microparticle raw material 1 and macroparticle raw material 1 are homogeneously mixed at a weight ratio of 2:8 for 2 minutes using an acoustic mixer to prepare a mixture.

### Comparative example 2 (Mixture washing process)

10g of microparticles having D50 of 4 µm and 40g of macroparticles having D50 of 10 µm are homogeneously mixed for 2 minutes using an acoustic mixer to prepare a mixture. The mixture is put into 60g of water, stirred for 5 minutes, and filtered for 2 minutes using a filter funnel, dried in a vacuum oven of 130°C for 12 hours or more and classified through an ultrasonic classifier.

### Comparative example 3 (Mixture washing process)

10g of microparticles having D50 of 4 µm and 40g of macroparticles having D50 of 10 µm are homogeneously mixed for 2 minutes using an acoustic mixer to prepare a mixture. The mixture is put into 50g of water, stirred for 5 minutes, filtered for 2 minutes using a filter funnel, dried in a vacuum oven of 130°C for 12 hours or more and classified through an ultrasonic classifier.

### Comparative example 4 (Individual washing process)

Miroparticle raw material 2 and macroparticle raw material 2 are homogeneously mixed at a weight ratio of 2:8 for 2 minutes using an acoustic mixer to prepare a mixture.

### Comparative example 5 (Coating layer formation after individual washing process)

The result of comparative example 1 is mixed with H₃BO₃ and sintered at 300°C for 5 hours to form a coating layer.

### Comparative example 6 (Coating layer formation after individual washing process)

The result of comparative example 2 is mixed with H₃BO₃ and sintered at 300°C for 5 hours to form a coating layer.

### Comparative example 7 (Coating layer formation after individual washing process)

The result of comparative example 3 is mixed with H₃BO₃ and sintered at 300°C for 5 hours to form a coating layer.

### Example 1

10g of microparticles having D50 of 4µm is put into 20g of water and stirred for 5 minutes to wash, and separately, 40g of macroparticles having D50 of 10 µm is put into 40g of water and stirring for 5 minutes to wash. Each of the washed microparticles and the washed macroparticles is supplied to a mixing tank, homogeneously mixed for 30 seconds, filtered for 2 minutes using a filter funnel, dried in a vacuum oven of 130°C for 12 hours or more and classified through an ultrasonic classifier.

### Example 2

10g of microparticles having D50 of 4 µm are put into 20g of water and stirred for 5 minutes to wash, and separately, 40g of macroparticles having D50 of 10 µm are put into 40g of water and stirred for 5 minutes to wash. Each of the washed microparticles and the washed macroparticles is supplied to a line mixer, homogeneously mixed together, filtered for 10 minutes using a filter press, dried in a vacuum oven of 130°C for 12 hours or more and classified through an ultrasonic classifier.

### Example 3

10g of microparticles having D50 of 4 µm are put into 20g of water and stirred for 5 minutes to wash, and separately, 40g of macroparticles having D50 of 10 µm are put into 40g of water and stirred for 5 minutes to wash. Each of the washed microparticle and the washed macroparticle is homogeneously mixed through a static mixer, filtered for 2 minutes using a filter funnel, dried in a vacuum oven of 130°C for 12 hours or more and classified through an ultrasonic classifier.

### Example 4

10g of microparticles having D50 of 4 µm are put into 20g of water and stirred for 5 minutes to wash, and separately, 40g of macroparticles having D50 of 10 µm are put into 40g of water and stirred for 5 minutes to wash. Each of the washed microparticles and the washed macroparticles is homogeneously mixed through a static mixer, filtered for 10 minutes using a filter press, dried in a vacuum oven of 130°C for 12 hours or more and classified through an ultrasonic classifier.

### Example 5

The result of example 1 is mixed with H₃BO₃ and sintered at 300°C for 5 hours to form a coating layer.

**[Table 1]**

| | Positive electrode material | Water content | BET | Ex. Li (weight%) | | | Ex. Li (weight%) / BET (m²/g) | | |
|---|---|---|---|---|---|---|---|---|---|
| | Average particle size (D50) | % | (m²/g) | LC | LH | Net | LC | LH | Net |
| Microparticle raw material 1 | 4 µm | 17.3 | - | 0.201 | 0.207 | 0.408 | - | - | - |
| Macroparticle raw material 1 | 10 µm | 6.0 | - | 0.136 | 0.236 | 0.372 | - | - | - |
| Comparative example 1 | 10 µm + 4 µm (8:2 weight ratio) | - | 1.2772 | 0.188 | 0.221 | 0.409 | 0.147 | 0.173 | 0.320 |
| Comparative example 2 | | 9.2 | 1.3069 | 0.158 | 0.205 | 0.363 | 0.121 | 0.157 | 0.278 |
| Comparative example 3 | | 9.4 | 1.0634 | 0.173 | 0.225 | 0.398 | 0.163 | 0.212 | 0.374 |
| Example 1 | | 8.7 | 1.2167 | 0.173 | 0.210 | 0.383 | 0.142 | 0.173 | 0.315 |
| Example 3 | | 9.3 | 1.1044 | 0.161 | 0.223 | 0.384 | 0.146 | 0.202 | 0.348 |

**[Table 2]**

| | Positive electrode material | Water content | BET | Ex. Li (weight%) | | | Ex. Li (weight%) / BET (m²/g) | | |
|---|---|---|---|---|---|---|---|---|---|
| | Average particle size (D50) | % | (m²/g) | LC | LH | Net | LC | LH | Net |
| Microparticle raw material 2 | 4 µm | 4.8 | - | 0.144 | 0.219 | 0.363 | - | - | - |
| Macroparticle raw material 2 | 10 µm | 1.9 | - | 0.171 | 0.170 | 0.341 | - | - | - |
| Comparative example 4 | 10 µm + 4 µm (8:2 weight ratio) | - | 1.3315 | 0.141 | 0.198 | 0.339 | 0.110 | 0.150 | 0.260 |
| Example 2 | | 2.8 | 1.3244 | 0.123 | 0.194 | 0.317 | 0.093 | 0.146 | 0.239 |
| Example 4 | | 1.9 | 1.2762 | 0.141 | 0.191 | 0.332 | 0.111 | 0.150 | 0.260 |

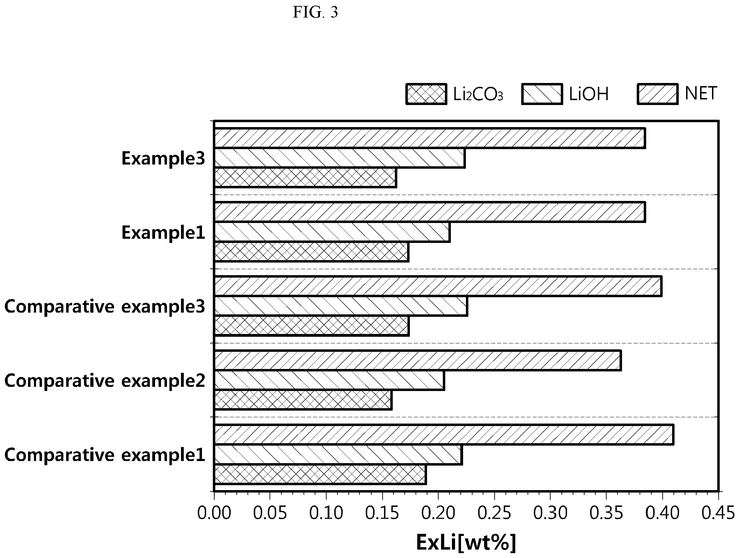

Table 1 presents the powder characteristics of the washed product depending on the washing method. Additionally, FIG. 3 shows the amount of residual lithium impurities in the mixture of positive electrode active material particles of Ni-rich lithium composite transition metal oxide manufactured by the manufacturing methods of examples and comparative examples.

The microparticles have relatively high water content, and the amount of residual lithium impurities tends to increase after drying the positive electrode material. When manufactured by the mixture washing process or the washing process according to the present disclosure, this phenomenon is reduced.

Meanwhile, the mixture washing process has a large difference in washing performance depending on the amount of water used, and as the amount of residual lithium impurities increases, the disadvantage by side reactions with the electrolyte solution increases, and when overwashing is performed, the surface structure of the positive electrode material is adversely influenced. When manufactured by the individual washing process and the washing process according to the present disclosure, the amount of residual lithium impurities is found similar, and this result comes from the suitable washing conditions for microparticles and macroparticles having different average particle sizes.

The powder characteristics of the washed result according to the filtration method of Table 2 also show the same tendency.

**[Table 3]**

| | 0.2C CHC | | | | HT Capacity | | Resistance |
|---|---|---|---|---|---|---|---|
| | CC | DC | EFFi. | DCIR | 1^{st} Cap. | 30^{th} | 30^{th} |
| | mAh/g | | % | Ω | mAh/g | % | % |
| Comparative example 5 | 227.2 | 207.2 | 91.2 | 15.3 | 217.2 | 96.9 | 19.9 |
| Comparative example 6 | 228.6 | 207.5 | 90.8 | 15.2 | 216.4 | 97.0 | 29.7 |
| Comparative example 7 | 227.6 | 207.0 | 90.9 | 15.4 | 217.2 | 97.2 | 24.1 |
| Example 5 | 228.1 | 207.6 | 91.0 | 15.4 | 217.4 | 97.3 | 19.4 |

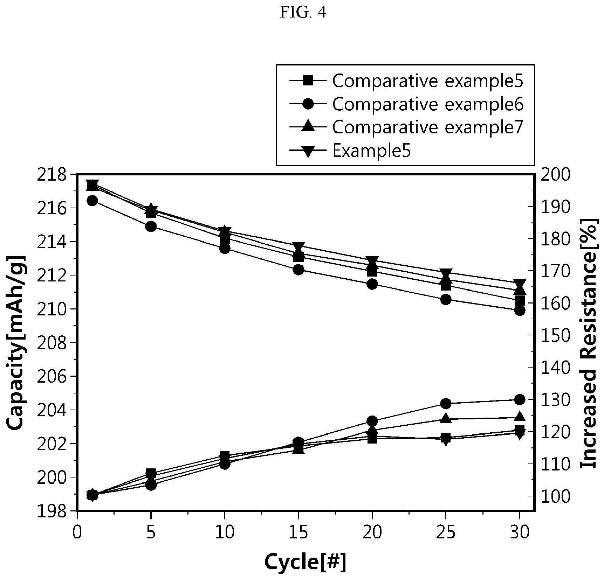

Table 3 shows the CHC evaluation results of the positive electrode material depending on the washing method. Additionally, FIG. 4 shows the cycling characteristics of batteries manufactured using the mixture of positive electrode active material particles of Ni-rich lithium composite transition metal o.xide manufactured by the manufacturing methods of examples and comparative examples.

In the CHC evaluation results depending on the washing method, 0.2C discharge capacity shows a similar result. A charge capacity difference depending on the percentage of water in the mixture washing process is identified. In the initial charge capacity value, comparative example 5 according to the individual washing process shows the lowest performance, but in the high temperature life evaluation results, shows a superior value over the mixture washing process, and has a similar life and a small increase in resistance. Comparative example 6 showing an overwashing tendency in the mixture washing process has superior initial capacity over the other examples but shows a relatively low initial capacity value in high temperature life evaluation and a high increase in resistance. In the case of comparative example 7 having relatively low washing performance, in high temperature life evaluation, the initial capacity is similar to the other examples, but an increase in resistance is inferior in the same way as comparative example 6. Example 5 shows a similar or slightly superior life value and has an increase in resistance at the similar level to the individual washing process. This reveals that the washing process of the present disclosure is effective.

## Claims

1. A method for manufacturing a mixture of positive electrode active material particles of nickel-rich lithium composite transition metal oxide, comprising the steps of::
(S1) washing first positive electrode active material particles having a predetermined average particle size and consisting of a positive electrode active material of lithium composite transition metal oxide having the nickel content of 80 mol% or more in the total transition metal;
(S2) washing second positive electrode active material particles having a predetermined average particle size and consisting of a positive electrode active material of lithium composite transition metal oxide having the nickel content of 80 mol% or more in the total transition metal, wherein the predetermined average particle size of the second positive electrode active material particles is different from the average particle size of the first positive electrode active material particles;
(S3) mixing the first positive electrode active material particles and the second positive electrode active material particles respectively washed from the (S1) and the (S2) to manufacture a mixture of positive electrode active material particles; and
(S4) filtering and drying the mixture of positive electrode active material particles.

2. The method for manufacturing a mixture of positive electrode active material particles of nickel-rich lithium composite transition metal oxide according to claim 1, wherein the lithium composite transition metal oxide is represented by the following Formula 1:
<Formula 1> Li₁₊ₐ[NiₓCo_{y}M¹_{z}M²_{w}]O₂
wherein M¹ is at least one selected from Mn and Al,
M² is at least one selected from Zr, B, W, Mo, Cr, Nb, Mg, Hf, Ta, La, Ti, Sr, Ba, Ce, F, P, S and Y, and
0≤a≤0.3, 0.6≤x<1.0, 0<y≤0.4, 0<z≤0.4, 0≤w≤0.2, x+y+z+w=1.

3. The method for manufacturing a mixture of positive electrode active material particles of nickel-rich lithium composite transition metal oxide according to claim 1, wherein an average particle size (D50) of the first positive electrode active material particles: an average particle size (D50) of the second positive electrode active material particles is 20:1 to 8:3.

4. The method for manufacturing a mixture of positive electrode active material particles of nickel-rich lithium composite transition metal oxide according to claim 1, wherein an average particle size (D50) of the first positive electrode active material particles is 5 µm or less, and an average particle size (D50) of the second positive electrode active material particles is 9 µm or more.

5. The method for manufacturing a mixture of positive electrode active material particles of nickel-rich lithium composite transition metal oxide according to claim 1, wherein mixing the first positive electrode active material particles and the second positive electrode active material particles in the (S3) is performed in a mixing tank or by a line mixer.

6. The method for manufacturing a mixture of positive electrode active material particles of nickel-rich lithium composite transition metal oxide according to claim 1, further comprising a step of:
after the (S4),
classifying the dried mixture of positive electrode active material particles.

7. The method for manufacturing a mixture of positive electrode active material particles of nickel-rich lithium composite transition metal oxide according to claim 1, further comprising a step of:
after the (S4),
forming a coating layer on a surface of the positive electrode active material particles in the dried mixture of positive electrode active material particles.

8. The method for manufacturing a mixture of positive electrode active material particles of nickel-rich lithium composite transition metal oxide according to claim 7, wherein the coating layer is a boron containing coating layer.

9. The method for manufacturing a mixture of positive electrode active material particles of nickel-rich lithium composite transition metal oxide according to claim 1, wherein an amount of residual lithium impurities in the mixture of positive electrode active material particles of nickel-rich lithium composite transition metal oxide is 0.7 weight% or less.
